# EUROPEAN PATENT SPECIFICATION

(11) **EP 2 518 380 B1**
(45) Date of publication and mention of the grant of the patent: **06.11.2013**
(21) Application number: 11003476.6
(22) Date of filing: 28.04.2011
(51) Int. Cl.: F16K 31/42

(54) **Multidirectional value**
Mehrwegeventil
Valeur multidirectionnelle

(43) Date of publication of application: 31.10.2012
(73) Proprietor: Robert Bosch GmbH, 70469 Stuttgart (DE)
(72) Inventor: Bouchex, Emmanuel, 74800 Saint-Pierre-en-Faucigny (FR); Bonino, Piere, 74800 Saint-Pierre-en-Faucigny (FR)
(74) Representative: Thürer, Andreas

(56) References cited:
- CN-Y- 2 826 041
- DE-A1-102005 003 982

## Description

### Area of the Invention

The invention relates to a multidirectional valve in slide construction, comprising a valve housing having a slide hole, in which a valve slide is situated so it is longitudinally movable to switch pressure medium flows between external connections, which can be actuated by at least one frontally situated control piston via control pressure, the control piston being provided with means for rapid venting of the control pressure.

### Prior Art

Directional valves having a palette of all conceivable valve functions are typically offered in the scope of a valve series. *Inter alia,* 3/2-, 2 x 3/2-, 4/2-, 5/2-, or 5/3-directional valves are available in monostable or bistable variants.

According to the generally known prior art, a plurality of individual valves of different valve functions are required within a pneumatic system to activate closely connected pressure medium assemblies and are typically locally assembled within a compact valve unit. All valves of such a valve unit can thus use a common feed pressure and venting connection. The electrical activation of the individual pneumatic directional valves may be implemented in a valve unit using minimal wiring outlay.

The trend in technology is going more and more toward compactly-constructed valve units having little control of the flow rate, which require pneumatic directional valves having the smallest possible constructions and having ever shorter switching times.

According to the generally known prior art, a rapid venting valve for controlling the outflow is situated on a pneumatic pilot control of a control duct. The disadvantages in such a configuration are the larger dimensions of the component and the higher noise level. On the other hand, if the dimensions of the component remain unchanged, greater operating pressures must be used, which could result in shortening of the lifetime of the component.

The document CN 2 826 041 discloses a multidirectional pneumatic valve which is matched with a lifting device controlled by a hydraulic system. The hydraulic system includes adjustable lifting speed means.

### Brief Description of the Invention

It is therefore the object of the present invention to improve a pneumatic slide valve in such a way that the switching time is significantly shortened by optimal air return.

The object is achieved proceeding from a multidirectional valve according to the preamble of Claim 1 in connection with the characterizing features thereof. The following dependent claims provide advantageous refinements of the invention.

The object is achieved in that a control piston recess for housing a seat valve, as means for the rapid venting, is situated in a control piston. The invention is based on the finding that to optimize the switching time of the pneumatically controlled slide valve, the slide valve must have the least restoring force during the switch position "on" and the maximum restoring force, which results due to the pressure in the restoring chamber and the pressure of the springs, during the switch position "off".

### Advantages of the Solution

A sealing ring is preferably situated between the valve housing and the control piston, which comprises a sealing lip, which is provided as the sealing means of a control chamber from a restoring chamber. In addition, this sealing ring is provided as a supplemental means for the rapid venting. The restoring chamber is connectable by a slide hole to the control piston recess. A through flow of the compressed air via the slide valve into the control piston recess and the restoring chamber connected thereto is thus implemented. If compressed air is applied to the control chamber, the sealing lip of the sealing ring seals off the control piston recess and the restoring chamber connected thereto.

At least one restoring spring is advantageously situated in the restoring chamber between the control piston and the valve housing. Parallel thereto, a compensating spring can be situated in the control piston recess between the control piston and a valve slide. The object of these spring elements is to return the control piston when compressed air is not applied to the control chamber.

According to a further measure which improves the invention, the seat valve opens from a pressure of approximately 2.8 bar when the control pressure of approximately 6.3 bar is applied to the control chamber and thus allows a through flow of the compressed air into the control piston recess and the restoring chamber. As soon as a pressure of approximately 3.5 bar has built up in the control piston recess and the restoring chamber and the control pressure in the control chamber is let off, the seat valve closes again, so that the pressure in the control piston recess and the restoring chamber cannot be let off. This pressure accelerates the return of the control piston and thus allows rapid switching.

A further optional aspect of the invention is the compressed air emptying of the control piston recess and the restoring chamber via the sealing lip of the sealing ring, on which force no longer acts after the pressure release in the control chamber and this must thus yield in order to let the compressed air escape from the control piston recess and the restoring chamber.

The valve slide is preferably fastenable via a plug connection on the control piston, so that the control piston recess thus results. A further advantage is that this improved control piston can thus replace any classical control piston without modifications of the valve body

### Brief Description of the Drawing

Further measures which improve the invention are explained in greater detail hereafter together with the description of a preferred exemplary embodiment of the invention on the basis of the figures. In the figures:
Figure 1 shows a longitudinal section through a pneumatic 5/2-multidirectional valve having bistable valve function,
Figure 2 shows a longitudinal section through a rapid venting valve in the multidirectional valve according to Figure 1 during the first switch position when an operating pressure is applied to a control chamber,
Figure 3 shows a longitudinal section through a rapid venting valve in the multidirectional valve according to Figure 1 during a pressure equalization between the control chamber and a control piston recess,
Figure 4 shows a longitudinal section through a rapid venting valve in the multidirectional valve according to Figure 1 during the second switch position, in the case of emptying of the control chamber by a return pressure,
Figure 5 shows a longitudinal section through a rapid venting valve in the multidirectional valve according to Figure 1 during the return of the control piston, and
Figure 6 shows a longitudinal section through a rapid venting valve in the multidirectional valve according to Figure 1 while the return pressure is let off via a sealing lip of a sealing ring.

### Detailed Description of the Drawing

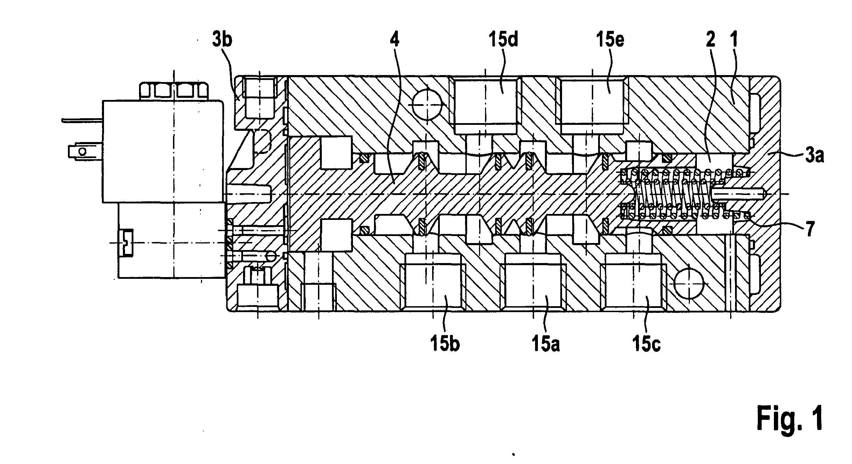

According to Figure 1, the bistable 5/2-directional valve has a valve housing (1), which has a slide hole (2) extending along the longitudinal axis of the valve housing (1). The slide hole (2) is closed on both sides using covers (3a, 3b). An axially displaceable valve slide (4) is situated inside the slide hole, which is movable from one front side using a control piston (5). A control chamber (6), to which a control pressure can be applied, is associated with the control piston (5).

A spring element (7) is provided toward the other end of the valve slide (4). The spring element (7) is used to restore the valve slide (4) when pressure is not applied to the control chamber (6). In the 5/2-directional valve shown, the central feed pressure connection P (15a) is adjoined on both sides in the longitudinal extension of the slide hole (2) by a venting connection R (15b) and S (15c), which thus lie on the outside. Two operating connections A (15d) and B (15e) are situated diametrically opposite, between the venting connection R (15b) and the feed pressure connection P (15a), but also between the venting connection S (15c) and the feed pressure connection P (15a).

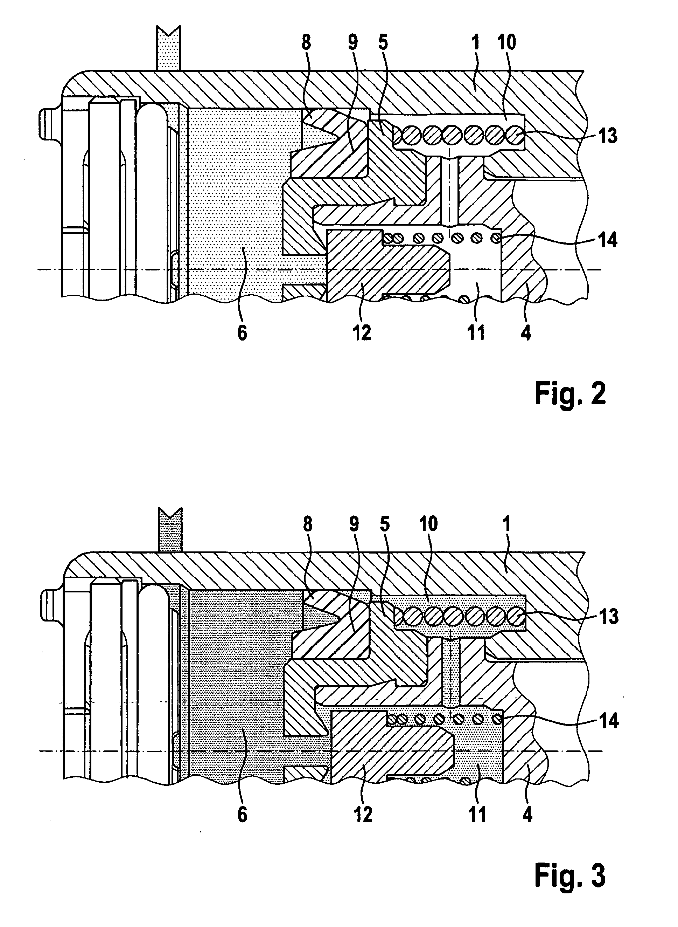

According to Figure 2, in the first work step of the first switch position, through a control pressure of up to 6.3 bar acting on the control chamber (6), an operating pressure of up to 2.3 bar is applied to the control chamber (6). The control piston (5) is thus displaced together with the valve slide (4) into the switch position "on". A sealing lip (8) of a sealing ring (9), preferably a radial lip sealing ring, prevents a through flow of the pressure in the direction of a restoring chamber (10). A seat valve (12) is situated frontally in the control piston (5) in a control piston recess (11) as the means for rapid venting. The control piston recess (11), which is formed in that the valve slide (4) is fastenable via a plug connection on the control piston (5), is connected via a slide hole to the restoring chamber (10). A restoring spring (13) is situated in the restoring chamber (10) between the control piston (5) and the valve housing (1). Parallel thereto, a compensating spring (14) is situated in the control piston recess (11) between the valve slide (4) and the seat valve (12). The restoring spring (13) and the compensating spring (14) are used to restore the control piston (5) when compressed air is not applied to the control chamber (6).

According to Figure 3, in the second work step of the first switch position, a total control pressure of up to 6.3 bar can be applied to the control chamber (6). The seat valve (11) opens from a pressure of 2.8 bar and allows a through flow of the compressed air, so that a return pressure of up to 3.5 bar is built up in the control piston recess (11), and the restoring chamber (10) connected thereto.

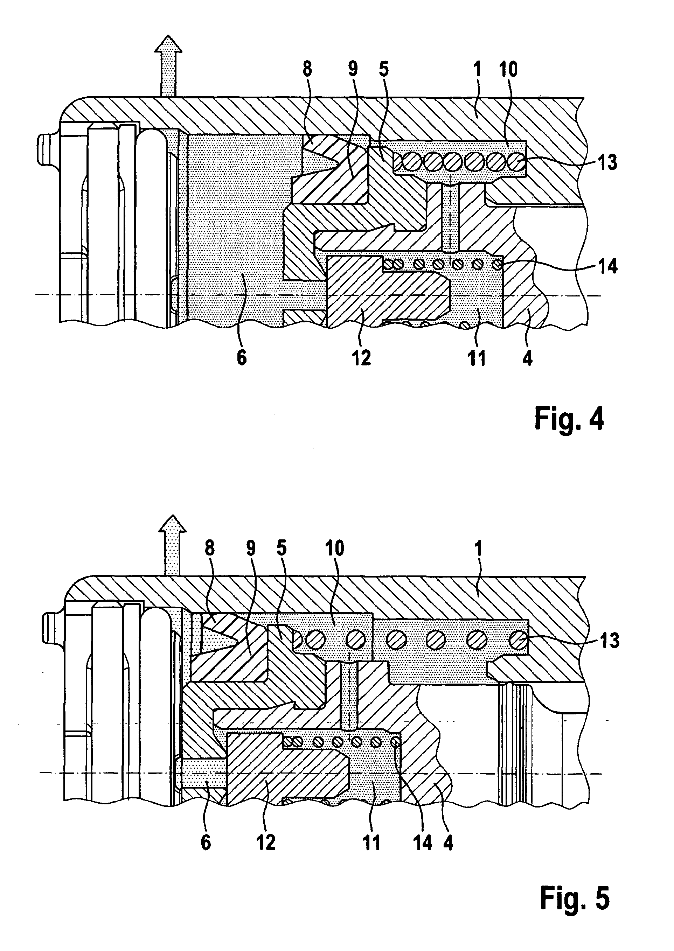

According to Figure 4, the emptying of the control chamber (6) begins in the first work step of the second switch position, so that the pressure in the control chamber (6) drops to 3.6 bar.

According to Figure 5, in the second work step of the second switch position, the control piston (5) is displaced together with the valve slide (4) into the switch position "off" by the pressure loss in the control chamber (6). A residual pressure in the control chamber (6) exerts a force on the sealing lip (8) of the sealing ring (9), which prevents emptying of the control piston recess (11) and the restoring chamber (10) connected thereto.

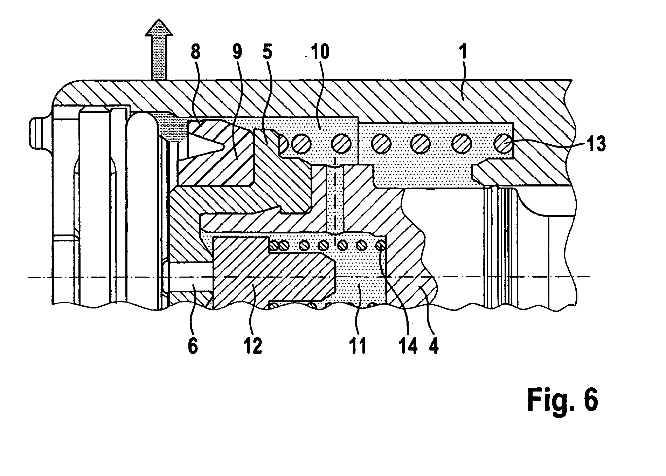

According to Figure 6, the control chamber (6) is completely emptied, so that no pressure still prevails therein and therefore no force also acts on the sealing lip (8) of the sealing ring (9). This permits emptying of the return pressure in the control chamber recess (11) and the restoring chamber (10) connected thereto and allows the rapid venting.

**List of reference numerals**
- 1: valve housing
- 2: slide hole
- 3a: cover
- 3b: cover
- 4: valve slide
- 5: control piston
- 6: control chamber
- 7: spring element
- 8: sealing lip
- 9: sealing ring
- 10: restoring chamber
- 11: control piston recess
- 12: seat valve
- 13: restoring spring
- 14: compensating spring
- 15a: feed pressure connection P
- 15b: venting connection R
- 15c: venting connection S
- 15d: operating connection A
- 15e: operating connection B

the means for the rapid venting.

## Claims

1. A multidirectional valve in slide construction, comprising a valve housing (1) having a slide hole, in which a valve slide (4) is situated so it is longitudinally movable to switch pressure medium flows between external connections (15a-e), which valve slide can be actuated via control pressure by at least one frontally situated control piston (5), the control piston (5) interacting with means for the rapid venting of the control pressure, **characterized in that** a control piston recess (11) is frontally situated in the control piston (5) to house a seat valve (12) as means for the rapid venting.

2. The multidirectional valve according to Claim 1, **characterized in that** a sealing ring (9), comprising a sealing lip (8), is situated between the valve housing (1) and the control piston (5), which is provided as the sealing means of a control chamber (6) from a restoring chamber (10) and is provided as supplementary means for the rapid venting.

3. The multidirectional valve according to Claim 2, **characterized in that** the restoring chamber (10) is connectable through the slide hole (2) to the control piston recess (11).

4. The multidirectional valve according to Claim 2, **characterized in that** a restoring spring (13) in the restoring chamber (10) is situated between the control piston (5) and the valve housing (1).

5. The multidirectional valve according to Claim 1, **characterized in that** a compensating spring (14) is situated in the control piston recess (11) between the seat valve (12) and a valve slide (4).

6. The multidirectional valve according to Claim 1, **characterized in that** the seat valve (12) opens at a pressure in the control chamber (6) from 2.5 bar, in order to permit a through flow of the compressed air into the control piston recess (11) and the restoring chamber (10) connected thereto.

7. The multidirectional valve according to Claim 6, **characterized in that** a pressure of up to 3.8 bar can be applied to the control piston recess (11) and the restoring chamber (10).

8. The multidirectional valve according to Claim 1, **characterized in that** the control chamber (6) displaces the valve slide (4) into the operating position "off" for the compressed air emptying.

9. The multidirectional valve according to Claim 8, **characterized in that** the compressed air emptying of the control piston recess (11) and the restoring chamber (10) is performed via the sealing lip (8) of the sealing ring (9).

10. The multidirectional valve according to Claim 1, **characterized in that** the control piston (5) is fastenable via a plug connection on the valve slide (4), whereby the control piston recess (11) is formed.

## Patentansprüche

1. Multidirektionales Ventil in Schiebekonstruktion, enthaltend ein Ventilgehäuse (1) mit einem Schiebeloch, in dem ein Ventilschieber (4) so angeordnet ist, dass er in Längsrichtung bewegbar ist, um Druckmediumströme zwischen externen Anschlüssen (15a-e) zu schalten, wobei der Ventilschieber durch einen Steuerdruck von mindestens einem an der Vorderseite angeordneten Steuerkolben (5) betätigt werden kann, wobei der Steuerkolben (5) mit Mitteln für das rasche Entlasten des Steuerdrucks wechselwirkt, **dadurch gekennzeichnet, dass** eine Steuerkolbenausnehmung (11) an der Vorderseite im Steuerkolben (5) zur Aufnahme eines Sitzventils (12) als Mittel für das rasche Entlasten angeordnet ist.

2. Multidirektionales Ventil nach Anspruch 1, **dadurch gekennzeichnet, dass** ein Dichtungsring (9), der eine Dichtungslippe (8) enthält, zwischen dem Ventilgehäuse (1) und dem Steuerkolben (5) angeordnet ist, der als das Dichtungsmittel einer Steuerkammer (6) aus einer Wiederherstellungskammer (10) vorgesehen ist und als Ergänzungsmittel für das rasche Entlasten vorgesehen ist.

3. Multidirektionales Ventil nach Anspruch 2, **dadurch gekennzeichnet, dass** die Wiederherstellungskammer (10) durch das Schiebeloch (2) mit der Steuerkolbenausnehmung (11) anschließbar ist.

4. Multidirektionales Ventil nach Anspruch 2, **dadurch gekennzeichnet, dass** eine Rückstellfeder (13) in der Wiederherstellungskammer (10) zwischen dem Steuerkolben (5) und dem Ventilgehäuse (1) angeordnet ist.

5. Multidirektionales Ventil nach Anspruch 1, **dadurch gekennzeichnet, dass** eine Ausgleichsfeder (14) in der Steuerkolbenausnehmung (11) zwischen dem Sitzventil (12) und einem Ventilschieber (4) angeordnet ist.

6. Multidirektionales Ventil nach Anspruch 1, **dadurch gekennzeichnet, dass** sich das Sitzventil (12) bei einem Druck in der Steuerkammer (6) von 2,5 Bar öffnet, um einen Durchfluss von Druckluft in die Steuerkolbenausnehmung (11) und die daran angeschlossene Wiederherstellungskammer (10) zu ermöglichen.

7. Multidirektionales Ventil nach Anspruch 6, **dadurch gekennzeichnet, dass** ein Druck von bis zu 3,8 Bar an die Steuerkolbenausnehmung (11) und die Wiederherstellungskammer (10) angelegt werden kann.

8. Multidirektionales Ventil nach Anspruch 1, **dadurch gekennzeichnet, dass** die Steuerkammer (6) den Ventilschieber (4) für ein Entleeren der Druckluft in die Betriebsposition "Aus" verstellt.

9. Multidirektionales Ventil nach Anspruch 8, **dadurch gekennzeichnet, dass** das Druckluftentleeren der Steuerkolbenausnehmung (11) und der Wiederherstellungskammer (10) über die Dichtungslippe (8) des Dichtungsrings (9) durchgeführt wird.

10. Multidirektionales Ventil nach Anspruch 1, **dadurch gekennzeichnet, dass** der Steuerkolben (5) über eine Steckverbindung am Ventilschieber (4) befestigbar ist, wodurch die Steuerkolbenausnehmung (11) gebildet wird.

## Revendications

1. Soupape à plusieurs voies de construction à tiroir, comprenant un boîtier de soupape (1) ayant un alésage de tiroir dans lequel un tiroir de soupape (4) est situé de manière mobile longitudinalement pour commuter des écoulements de fluide sous pression entre des raccordements externes (15a-e), lequel tiroir de soupape peut être actionné, par le biais d'une pression de commande, par au moins un piston de commande (5) situé du côté frontal, le piston de commande (5) coopérant avec un moyen de ventilation rapide de la pression de commande, **caractérisée en ce qu'**un évidement (11) de piston de commande est situé, du côté frontal, dans le piston de commande (5) pour recevoir une soupape à siège (12) en tant que moyen de ventilation rapide.

2. Soupape à plusieurs voies selon la revendication 1, **caractérisée en ce qu'**une bague d'étanchéité (9) comprenant une lèvre d'étanchéité (8) est située entre le boîtier de soupape (1) et le piston de commande (5), laquelle bague d'étanchéité est prévue en tant que moyen d'étanchéité d'une chambre de commande (6) par rapport à une chambre de rappel (10) et est prévue en tant que moyen supplémentaire de ventilation rapide.

3. Soupape à plusieurs voies selon la revendication 2, **caractérisée en ce que** la chambre de rappel (10) peut être raccordée à l'évidement (11) de piston de commande au moyen de l'alésage de tiroir (2).

4. Soupape à plusieurs voies selon la revendication 2, **caractérisée en ce qu'**un ressort de rappel (13) dans la chambre de rappel (10) est situé entre le piston de commande (5) et le boîtier de soupape (1).

5. Soupape à plusieurs voies selon la revendication 1, **caractérisée en ce qu'**un ressort compensateur (14) est situé dans l'évidement (11) de piston de commande entre la soupape à siège (12) et un tiroir de soupape (4).

6. Soupape à plusieurs voies selon la revendication 1, **caractérisée en ce que** la soupape à siège (12) s'ouvre à une pression de 2,5 bar dans la chambre de commande (6) afin de permettre un écoulement de l'air comprimé à travers l'évidement (11) de piston de commande et la chambre de rappel (10) raccordée à celui-ci.

7. Soupape à plusieurs voies selon la revendication 6, **caractérisée en ce qu'**une pression de jusqu'à 3,8 bar peut être appliquée dans l'évidement (11) de piston de commande et dans la chambre de rappel (10).

8. Soupape à plusieurs voies selon la revendication 1, **caractérisée en ce que** la chambre de commande (6) déplace le tiroir de soupape (4) dans la position de fonctionnement « arrêt » pour l'évacuation de l'air comprimé.

9. Soupape à plusieurs voies selon la revendication 8, **caractérisée en ce que** l'évacuation de l'air comprimé hors de l'évidement (11) de piston de commande et de la chambre de rappel (10) est effectuée par le biais de la lèvre d'étanchéité (8) de la bague d'étanchéité (9).

10. Soupape à plusieurs voies selon la revendication 1, **caractérisée en ce que** le piston de commande (5) peut être fixé par le biais d'une connexion enfichable sur le tiroir de soupape (4), ce qui permet de former l'évidement (11) de piston de commande.
